# EUROPEAN PATENT APPLICATION

(11) **EP 0 993 801 A1**
(43) Date of publication of application: **19.04.2000**
(21) Application number: 98830609.8
(22) Date of filing: 13.10.1998
(51) Int. Cl.: A47J 43/042

(54) **Machine for automatically preparing a shaken coffee drink**

(71) Applicant: Era S.n.c. di Renzi Gilberto & C., 47824 Poggio Berni RN (IT)
(72) Inventor: Farneti, Silvano, 47824 Poggio Berni RN (IT); Renzi, Gilberto, 47824 Poggio Berni RN (IT); Buda, Riccardo, 47039 Savignano Sul Rubicone Fo (IT)
(74) Representative: Lanzoni, Luciano

(57) **Abstract**

Machine for automatically preparing a shaken coffee drink, compnsing means (1) for actuating a kinematic mechanism (2) able to transmit an oscillatory alternating motion at a pre-set frequency and stroke, to at least a shaker (4) containing coffee drink, subjected to guiding and holding means (3) co-operating with said kinematic mechanism (2).

## Description

The present invention relates to a machine for automatically preparing a shaken coffee drink.

In the prior art, there are no machines able to reproduce automatically and in the best possible way a coffee drink prepared in a shaker, perfectly matching the characteristics of the one obtainable manually or even exceeding its quality.

The problem at the basis of the invention is to realise a machine that allows to agitate the shaker, previously filled with the drink, sugar and ice, in the way, for the time intervals and with the characteristics best suited to permit, in a short time, to prepare the drink, with characteristics at least equal to the one that can be obtained manually.

The machine is further able to provide, if it is desired, multiple shaken coffee drinks at a time, with silent, vibration-free operation and with low costs. In particular, the emulsion of the mix obtained is of extremely high quality, for it results from perfectly calibrated and repetitive jolting movements of the shaker, with a frequency that can be varied according to the type of emulsion to be obtained.

Additional features and advantages of the invention will become more readily apparent from the detailed description that follows, illustrated purely by way of example in the accompanying drawings wherein:
- Figure 1 shows a first embodiment of the subject machine, in a side view and with some parts removed (the motor) the better to highlight others;
- Figure 2 shows the machine as per Figure 1, in a front view with some parts removed (partially the shaker), the better to highlight others;
- Figure 3 shows a plan view of the machine as per the previous figures;
- Figure 4 shows a schematic and simplified view of a second embodiment of the subject machine;
- Figure 5 shows a third embodiment of the subject machine, in a side view and with some parts removed (the motor) the better to highlight others;
- Figure 6 shows the machine as per Figure 5 according to a VI - VI section line;
- Figure 7 shows a plan view of the machine as per Figures 5 and 6;
- Figure 8 shows a schematic view of the principle whereon a fourth and last embodiment of the subject machine is based

With reference to the accompanying drawings, the subject machine for automatically shaking coffee comprises, in principle, means (1) for actuating a kinematic mechanism (2) able to transmit an oscillatory alternating motion at a pre-set frequency and stroke, and at least one shaker (4) containing coffee drink, subjected to guiding and holding means (3) co-operating with said kinematic mechanism (2).

The actuating means (1) comprise a motor (12) which, through reduction gears or respectively driving and driven pulleys (121, 122) and related belt (123) transmits the necessary rotatory motion, at the prescribed number of rotations per minute which may be adjustable, to a shaft (24) which moves the kinematic mechanism (2).

The latter comprises at least one element (21) rotating in such a way that to each of its complete rotations corresponds a complete forward and reverse cycle of the alternative motion of the shaker (4).

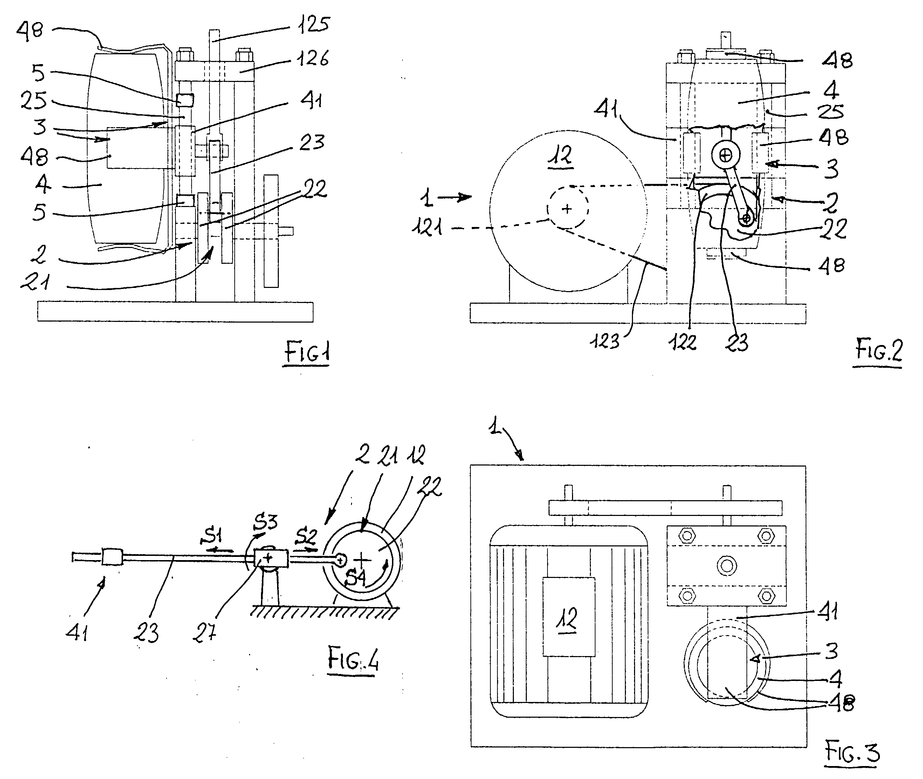

In a first embodiment, the rotating element (21) serves as a crank and it rotationally fastens a connecting rod (23) in turn sustaining a support (41) of the shaker (4), as can clearly be seen for instance in Figures 1 and 2. The connecting rod (23) is slidingly guided in rectilinear motion together with the support (41) of the shaker (4), which preferably serves as a cursor, being slidingly fastened on rectilinear vertical guides (25).

For the sake of greater stability, a vertical shaft (125) is provided as well, also axially guided at its top, in correspondence with a support (126) of the machine structure.

To avoid unwanted vibrations, the rotating element (21) serving as a crank comprises at least one flywheel (22), but preferably two flywheels (22) opposite with respect to the connecting rod (23). Moreover, to limit also the noise and vibration of the connecting rod backlash in its two dead centres, the support (41) is subjected, at the two sides, to the action of at least one elastic damper (5), normally made of elastomeric material.

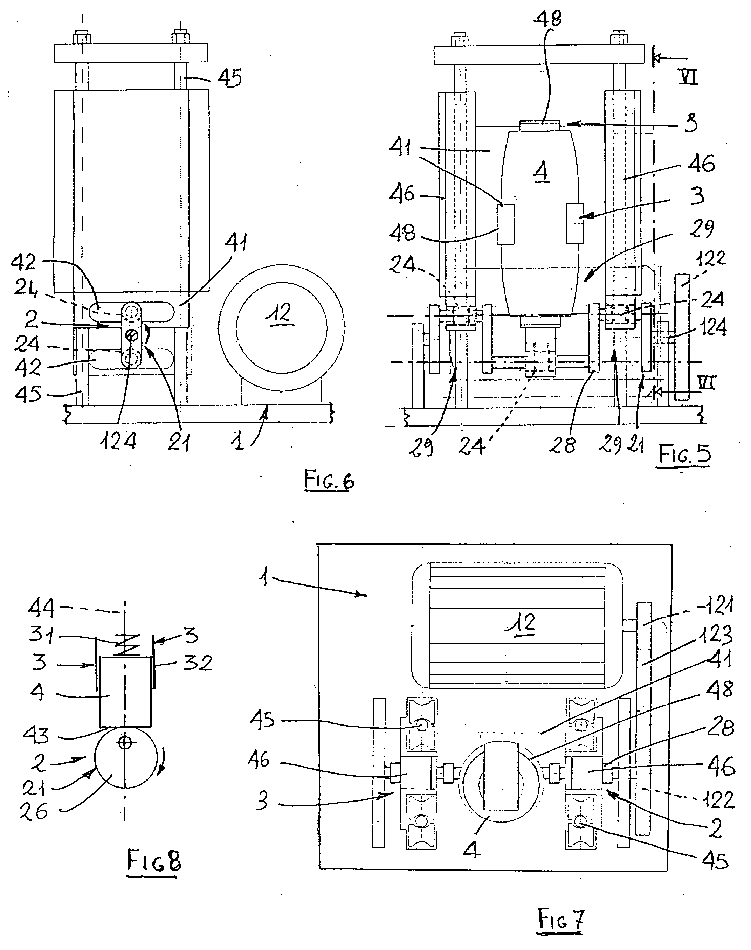

In a second simplified embodiment, shown in Figure 4, the connecting rod (23) is slidingly guided, in the two directions (S1) and (S2), within a sleeve (27) not translatable, but freely rotating, in the direction (S3) opposite to the rotation in the direction (S4) of the flywheel (22), actuated by the motor (12). At the free end of the connecting rod (23) the support (41) of the shaker (4), which moves according to an ellipse or ellipsoid, is provided.

In a third and effective embodiment (see Figures 5, 6 and 7), the subject machine provides for the rotating element (21) serving as a crank to be directly connected to the support (41). It is provided with attachment means (24), normally bearings, acting directly on the support (41) of the shaker in correspondence with a slot (42) preferably rectilinear and positioned perpendicularly with respect to rectilinear guides (45) for the movable alternating attachment of the support (41) itself. In this way, to each complete rotation of the rotating element (21) corresponds a complete forward and reverse cycle of the alternating motion of the shaker and a complete excursion in one direction and in the other of said attachment means (24) along the slot (42).

This embodiment may advantageously provide for the rotating element (21) to be structured according to a gooseneck shaft (28) with at least three loops (29) provided with corresponding attachment means (24) engaging in as many slots (42), respectively the central one obtained on the support (41) of the shaker and the side ones on corresponding counterweights (46) also subjected to rectilinear guides (45).

The entire structure is thereby balanced. The gooseneck shaft (28) balances the rotatory motion of the motor (13), whereas the counterweights, which are symmetrically positioned with respect to the support (41), have an alternating motion, but opposite in phase with respect to the support (41) and thus allow the best balanced motion of the support (41) itself.

Alternatively, the counterweights may be replaced by as many supports (41) with related shakers (4), where the two lateral shakers (4) serve as counterweight and balance for the central one and vice versa. It should also be emphasised that in any case, both with gooseneck shafts such as (28), and with multiple elements (21) rotating in parallel, it is always possible to realise machines that operate with multiple shakers (4).

A fourth embodiment is shown in Figure 8. In this case, the rotating element (21) is an eccentric (26) acting directly on a bottom (43) of the shaker (4), contrasted, on the opposite side, by elastic means (31) and subjected to guiding means (32) along its own longitudinal axis (44).

All embodiments described above comprise a support (41) with elastic grips (48) to facilitate gripping the shaker (4).

Moreover, the frequency of the oscillatory alternating motion is in the order of hundreds of cycles/minute (normally, about 500 cycles/minute, but in any case variable) and the stroke of the shaker support (41) is in the order of a few centimetres (normally about 2.5 cm).

## Claims

1. Machine for automatically preparing a shaken coffee drink, characterised in that it comprises means (1) for actuating a kinematic mechanism (2) able to transmit an oscillatory alternating motion at a pre-set frequency and stroke to at least a shaker (4) containing coffee drink, subjected to guiding and holding means (3) co-operating with said kinematic mechanism (2).

2. Machine according to claim 1, characterised in that said actuating means (1) comprise at least a motor (12) and in that said kinematic mechanism (2) comprises at least one rotating element (21) actuated by the motor (12) in such a way that to each complete rotation of the rotating element (21) corresponds a complete forward and reverse cycle of the alternating motion of the shaker (4).

3. Machine according to claim 2, characterised in that said rotating element (21) serves as a crank and rotationally fastens a connecting rod (23) which in turn sustains a support (41) of said shaker (4).

4. Machine according to claim 2, characterised in that said rotating element (21) serves as a crank and is provided with attachment means (24) acting directly on at least a support (41) of the shaker in correspondence with a slot (42) positioned transversely with respect to at least a rectilinear guide (45) for the movable alternating attachment of the support (41) itself, so that to each complete rotation of the rotating element (21) corresponds a complete forward and reverse cycle of the alternating motion of the shaker and a complete excursion in one direction or in the other of said attachment means (24) along the slot (42).

5. Machine according to claim 3, characterised in that said connecting rod (23) is slidingly guided in a rectilinear manner together with the support (41) of the shaker (4).

6. Machine according to claim 5, characterised in that the support (41) serves as a cursor, being slidingly attached on rectilinear guides (25).

7. Machine according to any of the claims 3,4,5 or 6 characterised in that the rotating element (21) serving as a crank is constituted by at least a flywheel (22).

8. Machine according to claim 7, characterised in that the rotating element (21) serving as a crank is constituted by two flywheels (22) opposite with respect to the connecting rod (23).

9. Machine according to any of the previous claims, characterised in that the support (41) is subjected, at least on one side, to the action of an elastic damper (5).

10. Machine according to claim 2, characterised in that said rotating element (21) is an eccentric (26) acting directly on a bottom (43) of the shaker (4), contrasted, on the opposite side, by elastic means (31) and subjected to guiding means (32) along its longitudinal axis (44).

11. Machine according to claim 3, characterised in that said connecting rod (23) is slidingly guided within a sleeve (27) not translatable, but rotating, the free end of the connecting rod (23) providing the support (41) of the shaker (4).

12. Machine according to claim 4, characterised in that said rotating element (21) is structured according to a gooseneck shaft (28) with at least three loops (29) where, in each loop (29), a corresponding attachment means (24) is provided, able to engage on related slots (42) of as many supports (41) of shakers (4) where the two lateral shakers (4) serve as counterweight and balance for the central one and vice versa.

13. Machine according to claim 4, characterised in that said rotating element (21) is structured according to a gooseneck shaft (28) with at least three loops (29) provided with corresponding attachment means (24) engaging in as many slots (42), respectively the central one obtained on the support (41) of the shaker and the lateral ones on corresponding counterweights (46) also subjected to rectilinear guides (45).

14. Machine according to any one of the previous claims, characterised in that the support (41) is provided with elastic grips (48).

15. Machine according to any one of the previous claims, characterised in that the frequency of the oscillatory alternating motion is in the order of hundreds of cycles/minute and the stroke of the support (41) of the shaker is in the order of a few centimetres.
